# EUROPÄISCHE PATENTSCHRIFT

(11) **EP 2 936 964 B1**
(45) Veröffentlichungstag und Bekanntmachung des Hinweises auf die Patenterteilung: **12.07.2017**
(21) Anmeldenummer: 15153950.9
(22) Anmeldetag: 05.02.2015
(51) Int. Cl.: A01F 7/06

(54) **Abscheideeinrichtung für einen Mähdrescher**
Separation device for a combine harvester
Dispositif de séparation pour une moissonneuse-batteuse

(30) Priorität: 24.04.2014 DE 102014105777
(43) Veröffentlichungstag der Anmeldung: 28.10.2015
(73) Patentinhaber: CLAAS Selbstfahrende Erntemaschinen GmbH, 33428 Harsewinkel (DE)
(72) Erfinder: Diekamp, Andreas, 33335 Gütersloh (DE)

(56) Entgegenhaltungen:
- EP-A1- 1 894 465
- EP-B1- 2 428 109

## Beschreibung

Die Erfindung betrifft eine gemäß dem Oberbegriff des Anspruchs 1 ausgebildete Abscheideeinrichtung für einen Mähdrescher.

Eine Abscheideeinrichtung der eingangsgenannten Art ist beispielsweise aus EP 2 428 109 B1 bekannt. Diese nach dem Axialflussprinzip arbeitende Abscheideeinrichtung weist ein Gehäuse mit einer Abscheidekorbanordnung und einer Deckelanordnung, die gemeinsam einen Hohlzylinder bilden, sowie einen Abscheiderotor auf, der drehbar gelagert in dem Hohlzylinder des Gehäuses aufgenommen ist, so dass zwischen Gehäuse und Abscheiderotor ein Zwischenraum zum Fördern von Erntegut umfänglich und entlang einer Längsachse des Abscheiderotors definiert ist. An einer dem Abscheiderotor zugewandten Innenfläche der Deckelanordnung sind Gutstromeingriffsmittel vorgesehen, die eingerichtet sind, umfänglich des Abscheiderotors rampenartig radial in einen bei der umfänglichen Förderung des Ernteguts im Zwischenraum umlaufenden Erntegutstrom einzugreifen, um diesen zur Erhörung der Abscheideleistung aufzulockern.

Die Gutstromeingriffsmittel weisen mindestens ein rampenförmiges Gutstromeingriffselement auf, wobei eine Rampenhöhe und damit eine Intensität des Eingriffs des Gutstromeingriffselements in den umlaufenden Erntegutstrom durch einen zwischen der Innenfläche der Deckelanordnung und dem Gutstromeingriffselement definierten Steigungswinkel beziehungsweise Anstellwinkel fest vorgegeben ist.

Durch das rampenförmige Gutstromeingriffselement an der Innenfläche der Deckelanordnung wird der an der Innenfläche der Deckelanordnung umlaufende und sich dabei zu einer Erntegutmatte verdichtende Erntegutstrom wieder aufgelockert, indem dieser durch das Gutstromeingriffselement von der Innenfläche der Deckelanordnung abgehoben wird und anschließend auf diese zurückfällt.

Um die Eingriffsstärke des Gutstromeingriffselements in den umlaufenden Erntegutstrom an unterschiedliche Betriebsbedingungen wie zum Beispiel unterschiedliches Erntegut anpassen zu können, ist das Gutstromeingriffselement lösbar an der Innenfläche der Deckelanordnung befestigt. Somit kann bei Bedarf ein eine feste Rampenhöhe vorgebendes Gutstromeingriffselement gegen ein eine andere feste Rampenhöhe vorgebendes Gutstromeingriffselement ausgetauscht werden. Ein solcher Austausch bedarf allerdings eines Stillstands der Abscheideeinrichtung, wodurch der Betriebsvariabilität der Abscheideeinrichtung Grenzen gesetzt sind.

Die Druckschrift EP 1 894 465 A1 offenbart eine Erntegutbearbeitungseinheit mit einem Axialrotor. Die Erntegutbearbeitungseinheit weist zwei wendelförmige Leitschienen unterschiedlicher Steigung auf. Die Leitschienen sind jeweils von einer wirksamen Position, in der sie sich unterhalb eines Deckelelementes befinden, in eine unwirksame Position, in der sie oberhalb des Deckelelementes angeordnet sind, verstellbar.

Die Druckschrift EP2 428 109 B1 offenbart ein Abscheideaggregat für einen Mähdrescher, das einen Abscheiderotor umfasst, der in einem Gehäuse angeordnet ist. An einem Deckel des Gehäuses sind Leitelemente angeordnet, die sich abschnittsweise in eine radiale Richtung des Deckels erstrecken.

Der Erfindung liegt die Aufgabe zugrunde, eine gemäß dem Oberbegriff des Anspruchs 1 ausgebildete Abscheideeinrichtung für einen Mähdrescher bereitzustellen, welche eine erhöhte Betriebsvariabilität hat.

Dies wird mit einer Abscheideeinrichtung gemäß Anspruch 1 erreicht. Weiterbildungen der Erfindung sind in den abhängigen Ansprüchen definiert.

Gemäß der Erfindung weist eine nach dem Axialflussprinzip arbeitende Abscheideeinrichtung für einen Mähdrescher ein Gehäuse mit einer Abscheidekorbanordnung und einer Deckelanordnung, die gemeinsam einen Hohlzylinder bilden, und einen Abscheiderotor auf, der drehbar gelagert in dem Hohlzylinder des Gehäuses aufgenommen ist, so dass zwischen Gehäuse und Abscheiderotor ein Zwischenraum zum Fördern von Erntegut umfänglich und entlang einer Längsachse des Abscheiderotors definiert ist. An einer dem Abscheiderotor zugewandten Innenfläche der Deckelanordnung sind Gutstromeingriffsmittel vorgesehen, die eingerichtet sind, umfänglich des Abscheiderotors rampenartig radial in einen bei der umfänglichen Förderung des Ernteguts im Zwischenraum umlaufenden Erntegutstrom einzugreifen.

Die erfindungsgemäße Abscheideeinrichtung zeichnet sich dadurch aus, dass die Gutstromeingriffsmittel verstellbar sind, so dass eine radiale Eingriffstiefe der Gutstromeingriffsmittel in den zwischen Gehäuse und Abscheiderotor definierten Zwischenraum veränderbar ist, und dass Antriebsmittel vorgesehen sind, die mit den Gutstromeingriffsmitteln zum Antreiben einer Verstellung dieser verbunden sind und die von außerhalb des Gehäuses aus zum Verstellantrieb der Gutstromeingriffsmittel ansteuerbar sind.

Dadurch, dass die Gutstromeingriffsmittel verstellbar sind, so dass deren radiale Eingriffstiefe in den zwischen Gehäuse und Abscheiderotor definierten Zwischenraum veränderbar ist, kann eine Intensität des Eingriffs des Gutstromeingriffselements in den umlaufenden Erntegutstrom verändert und damit an unterschiedliche Betriebsbedingungen wie zum Beispiel unterschiedliches Erntegut zur Optimierung der Abscheideleistung angepasst werden. Dadurch, dass die mit den Gutstromeingriffsmitteln zum Antreiben einer Verstellung dieser verbundenen Antriebsmittel von außerhalb des Gehäuses aus zum Verstellantrieb der Gutstromeingriffsmittel ansteuerbar sind, kann die Verstellung von deren radialer Eingriffstiefe komfortabel während des Betriebs der Abscheideeinrichtung durchgeführt werden, wodurch die Betriebsvariabilität der Abscheideeinrichtung erhöht ist.

Gemäß der Erfindung kann die Abscheidekorbanordnung einen oder mehrere längs entlang der Längsachse des Abscheiderotors aneinandergereihte siebartige Abscheidekörbe umfassen, wobei in jedem Abscheidekorb eine Vielzahl von Durchtrittsöffnungen vorgesehen sind, durch die hindurch ein abzuscheidender Erntegutanteil wie z.B. Korn aus einem Erntegutstrom, der in dem zwischen Gehäuse und Abscheiderotor definierten Zwischenraum umläuft, abgeschieden werden kann.

Gemäß der Erfindung kann die Deckelanordnung ein oder mehrere längs entlang der Längsachse des Abscheiderotors aneinandergereihte Deckelelemente umfassen.

Gemäß einer Ausführungsform der Erfindung weisen die Gutstromeingriffsmittel Gutstromeingriffselemente mit einer Breite auf, welche von zwei entlang der Längsachse des Abscheiderotors verlaufenden Längsrändern des jeweiligen Gutstromeingriffselements begrenzt sind, wobei die Gutstromeingriffselemente entlang der Längsachse des Abscheiderotors eine Länge aufweisen, die zumindest einem Teil einer axialen Erstreckung der Innenfläche der Deckelanordnung entspricht.

Mit anderen Worten können sich die Gutstromeingriffselemente je nach gewünschter Konfiguration entlang der Längsachse des Abscheiderotors über die gesamte axiale Erstreckung der Innenfläche der Deckelanordnung oder auch nur über einen Teil der axialen Erstreckung der Innenfläche der Deckelanordnung erstrecken. Gemäß der Erfindung ist es auch möglich, dass die Gutstromeingriffselemente entlang der Längsachse des Abscheiderotors ihrer jeweiligen Länge nach ohne oder mit Zwischenraum hintereinander angeordnet sind und sich dabei jeweils über einen Teil der axialen Erstreckung der Innenfläche der Deckelanordnung erstrecken.

Auf diese Weise lässt sich die Intensität des radialen Eingriffs der Gutstromeingriffsmittel in den zwischen Gehäuse und Abscheiderotor definierten Zwischenraum zusätzlich über die axiale Erstreckung der Innenfläche der Deckelanordnung hinweg konfigurieren und damit an angenommene Betriebsbedingungen zur Optimierung der Abscheideleistung anpassen.

Bevorzugt erstrecken sich die Gutstromeingriffsmittel in ihrer Länge über die gesamte Länge der Abscheidekorbanordnung. Gemäß der Erfindung sind mehrere aneinandergereihte Gutstromeingriffselemente vorgesehen, die sich mit ihrer Gesamtlänge über die gesamte Länge des mindestens einen Abscheidekorbes der Abscheidekorbanordnung erstrecken können. Auch können mehrere aneinandergereihte Abscheidekörbe vorgesehen sein, wobei sich jedes Gutstromeingriffselement einer Mehrzahl von aneinandergereihten Gutstromeingriffselementen über die gesamte Länge eines positionsmäßig jeweils dazu korrespondierenden Abscheidekorbes erstreckt. Andere Konfigurationen sind im Rahmen der Erfindung natürlich auch denkbar.

Gemäß einer weiteren Ausführungsform der Erfindung ist einer der beiden Längsränder eines Gutstromeingriffselements an einer sich entlang der Längsachse des Abscheiderotors erstreckenden Schwenkachse schwenkbar gelagert, so dass zum Verstellen der Gutstromeingriffsmittel ein zwischen der Innenfläche der Deckelanordnung und dem Gutstromeingriffselement definierter Anstellwinkel durch um die Schwenkachse Verschwenken des Gutstromeingriffselements veränderbar ist.

Die Realisierung der Verstellbarkeit der Gutstromeingriffselemente mittels schwenkbeweglicher Ausgestaltung dessen stellt eine einfache und damit kostengünstige Lösung bereit. Zudem kann eine schwenkbewegliche Ausführung der Gutstromeingriffselemente die für den Feldeinsatz erforderliche Robustheit gewährleisten.

Alternativ zur schwenkbeweglichen Ausgestaltung könnte die Verstellbarkeit der Gutstromeingriffselemente auch z.B. mittels Linearverfahrbarkeit des mindestens einen Gutstromeingriffselements realisiert sein.

Gemäß noch einer Ausführungsform der Erfindung ist in der Deckelanordnung ein sich längs entlang der Längsachse des Abscheiderotors erstreckender Durchgangsschlitz ausgebildet sind die Gutstromeingriffselemente längsseits in den Durchgangsschlitz eingesetzt, so dass der an der Schwenkachse gelagerte eine Längsrand der Gutstromeingriffselemente aus dem Gehäuse nach außen vorsteht und der andere Längsrand der Gutstromeingriffselemente innerhalb des Gehäuses angeordnet ist, wobei die Schwenkachse außerhalb des Gehäuses angeordnet ist.

Dadurch, dass gemäß dieser Ausgestaltung der Erfindung die Schwenkachse bzw. Drehachse der Gutstromeingriffselemente außerhalb des Gehäuses angeordnet ist, liegt die Schwenkachse im Betrieb der Abscheideeinrichtung nicht im umlaufenden Erntegutstrom und beeinträchtigt diesen daher nicht.

Gemäß noch einer weiteren Ausführungsform der Erfindung weist der Durchgangsschlitz umfänglich des Abscheiderotors eine solche Breite auf, dass sich das mindestens eine Gutstromeingriffselement bei minimalem Anstellwinkel an die Innenfläche der Deckelanordnung anlehnen kann.

Auf diese Weise kann in einer Minimaleingriffstellung der Gutstromeingriffselemente, welche auch eine Außerbetriebsstellung sein kann, eine stabile und definierte Endlage für die Gutstromeingriffselemente bereitgestellt werden.

Gemäß einer Ausführungsform der Erfindung sind die Gutstromeingriffselemente so ausgebildet, dass sie bei minimalem Anstellwinkel den Durchgangsschlitz im Bereich der Länge der Gutstromeingriffselemente verschließen. Die Gutstromeingriffselemente können zu diesem Zweck z.B. im mit dem Durchgangsschlitz zusammenwirkenden Bereich flächenmäßig geschlossen ausgebildet sein und bei minimalem Anstellwinkel ähnlich einer Ventilklappe längs des Durchgangsschlitzes an einer Außenfläche der Deckelanordnung und an der Innenfläche der Deckelanordnung anliegen und so den Durchgangsschlitz verschließen.

Damit kann in der Minimaleingriffstellung bzw. Außerbetriebsstellung der Gutstromeingriffselemente sicher verhindert werden, dass Erntegut durch den Durchgangsschlitz hindurch aus dem hohlzylindrischen Gehäuse der Abscheideeinrichtung austreten kann.

Gemäß noch einer Ausführungsform der Erfindung weist die Abscheideeinrichtung ferner eine Abdeckungsanordnung auf, die entlang der Längsachse des Abscheiderotors eine Länge, die mindestens der Länge des Durchgangsschlitzes entspricht, und umfänglich des Abscheiderotors eine Breite aufweist, die größer als die Breite des Durchgangsschlitzes ist, wobei die Abdeckungsanordnung radial auswärts der Schwenkachse längs entlang der Länge des Durchgangsschlitzes angeordnet ist, so dass sie den Durchgangsschlitz seiner Breite nach überspannend abdeckt.

Durch die Abdeckungsanordnung kann auch in den von der Minimaleingriffstellung abweichenden Stellungen der Gutstromeingriffselemente, wie z.B. in einer einen maximalen Anstellwinkel aufweisenden Maximaleingriffsstellung der Gutstromeingriffselemente, dem Umstand entgegengewirkt werden, dass durch den Durchgangsschlitz hindurch Erntegut aus dem hohlzylindrischen Gehäuse der Abscheideeinrichtung austritt. Gemäß der Erfindung kann die Abdeckungsanordnung ein einziges Abdeckungselement, welches mindestens die Länge des Durchgangsschlitzes hat, oder auch mehrere entlang der Längsachse des Abscheiderotors bzw. der Länge des Durchgangsschlitzes aneinandergereihte Abdeckungselemente aufweisen, welche gemeinsam mindestens die Länge des Durchgangsschlitzes haben.

Gemäß einer weiteren Ausführungsform der Erfindung weist die Abdeckungsanordnung mindestens eine Durchgangsöffnung im Bereich der Schwenkachse auf, wobei die Antriebsmittel außerhalb des Gehäuses angeordnet sind und die Gutstromeingriffselemente durch die mindestens eine Durchgangsöffnung hindurch mit den Antriebsmitteln antriebsverbunden sind. Dadurch, dass die mindestens eine Durchgangsöffnung im Bereich der sich zwischen Deckelanordnung und Abdeckungsanordnung befindenden Schwenkachse vorgesehen ist, wird die Durchgangsöffnung vonseiten des Durchgangsschlitzes her von der Schwenkachse verdeckt, so dass dem Umstand entgegengewirkt werden, dass durch die Durchgangsöffnung hindurch Erntegut austritt. Dadurch, dass die Antriebsmittel außerhalb des Gehäuses angeordnet sind, sind die Antriebsmittel keiner Verschmutzung durch den Erntegutstrom ausgesetzt und wird außerdem deren gehäuseexterne Ansteuerbarkeit begünstigt. Erfindungsgemäß sind die Gutstromeingriffselemente ausgehend von seinem an der Schwenkachse gelagerten einen Längsrand über einen vorbestimmten Breitenabschnitt dessen flächenmäßig geschlossen ausgebildet und schließen sich an den flächenmäßig geschlossenen Breitenabschnitt eine Mehrzahl von kammartig nebeneinander verlaufenden Eingriffsfingern an, deren freie Enden zusammen den anderen Längsrand der Gutstromeingriffselemente definieren.

Durch diese kammartige bzw. rechenartige Ausgestaltung des mindestens einen Gutstromeingriffselements kann im Betrieb der Abscheideeinrichtung z.B. Stroh eines im Zwischenraum umlaufenden Erntegutstroms von der Innenfläche der Deckelanordnung abgelenkt und aufgelockert werden und kann gleichzeitig im Erntegutstrom enthaltenes Korn zwischen den Eingriffsfingern hindurchtreten und entlang der Innenfläche der Deckelanordnung bis zu der Abscheidekorbanordnung transportiert werden und dort zur Abscheidung aus dem Gehäuse austreten.

Gemäß der Erfindung können sich die Eingriffsfinger ohne Neigung in Richtung der Längsachse des Abscheiderotors erstrecken, so dass sie den Erntegutstrom bezüglich seines Transports in der Axialrichtung nicht beeinflussen, oder können sich die Eingriffsfinger mit einer vorbestimmten Neigung in Richtung der Längsachse des Abscheiderotors erstrecken, so dass sie den Erntegutstrom bezüglich seines Transports in der Axialrichtung gezielt beeinflussen.

Beispielsweise können an der Innenfläche der Deckelanordnung eine Mehrzahl von koaxial zur Längsachse des Abscheiderotors spiralförmig nebeneinander angeordneten Leitelementen bzw. Leitschienen vorgesehen sein, die sich umfänglich abschnittsweise in radialer Richtung der Deckelanordnung erstrecken. Die Leitelemente weisen durch die spiralförmige Erstreckung eine Richtungskomponente in Axialrichtung des Abscheiderotors auf und unterstützen somit eine axiale Förderung des Erntegutstroms von einem Eingang der Abscheideeinrichtung entlang der Längsachse des Abscheiderotors zu einem Ausgang der Abscheideeinrichtung. Die Eingriffsfinger der Gutstromeingriffselemente können sich dabei mit einer solchen Neigung in Richtung der Längsachse des Abscheiderotors erstrecken, dass ihre Erstreckungsrichtung jener der Leitelemente entspricht. Gemäß der Erfindung weisen die Gutstromeingriffsmittel mehrere Gutstromeingriffselemente auf, die entlang der Längsachse des Abscheiderotors ihrer jeweiligen Länge nach ohne oder mit Längsabstand voneinander hintereinander angeordnet sind und die unabhängig voneinander verstellbar sind, so dass ihre jeweilige radiale Eingriffstiefe in den Zwischenraum veränderbar ist. Außerdem weisen die Antriebsmittel für jedes der Gutstromeingriffselemente eine eigene Antriebseinheit auf, die mit dem jeweiligen Gutstromeingriffselement zum Antreiben einer Verstellung dessen verbunden ist und die von außerhalb des Gehäuses aus zum Verstellantrieb des jeweiligen Gutstromeingriffselements ansteuerbar ist.

Dadurch, dass mehrere unabhängig voneinander verstellbare Gutstromeingriffselemente vorgesehen sind, kann die erfindungsgemäße Abscheideeinrichtung noch besser an die jeweils vorliegenden Betriebsbedingungen zur Optimierung der Abscheideleistung angepasst werden.

Gemäß einer Ausführungsform der Erfindung weisen die Antriebsmittel zum Verstellantrieb des mindestens einen Gutstromeingriffselements einen Pneumatikzylinder auf. Bevorzugt weist jede Antriebseinheit der Antriebsmittel einen Pneumatikzylinder zum Verstellantrieb des jeweils angebundenen Gutstromeingriffselements auf.

Da die in einem Pneumatikzylinder zum Stellen verwendete Druckluft eine gewisse Kompressibilität aufweist und damit ab einer bestimmten Krafteinwirkung ein bevorzugt in Richtung der Minimaleingriffsstellung Ausweichen des jeweils verstellangetriebenen Gutstromeingriffselements zugelassen wird, kann der Pneumatikzylinder gleichzeitig mit seiner Verstellantriebsfunktion auch eine Überlastschutzfunktion für das betreffende Gutstromeingriffselement bereitstellen.

Gemäß einer alternativen Ausführungsform der Erfindung weisen die Antriebsmittel zum Verstellantrieb der Gutstromeingriffselemente einen Hydraulikzylinder auf. Bevorzugt weist jede Antriebseinheit der Antriebsmittel einen Hydraulikzylinder zum Verstellantrieb des jeweils angebundenen Gutstromeingriffselements auf.

Ein dem Hydraulikkreislauf des mindestens einen Hydraulikzylinders zugeordnetes Druckbegrenzungsventil kann dazu verwendet werden, dass ab einer bestimmten Krafteinwirkung ein bevorzugt in Richtung der Minimaleingriffsstellung Ausweichen des jeweils verstellangetriebenen Gutstromeingriffselements zugelassen wird, um so eine Überlastschutzfunktion bereitzustellen.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand einer bevorzugten Ausführungsform und unter Bezugnahme auf die beigefügten Figuren beschrieben.
- Fig.1: zeigt eine perspektivische Teilansicht einer nach dem Axialflussprinzip arbeitenden Abscheideeinrichtung eines Abscheideaggregats eines Mähdreschers gemäß einer Ausführungsform der Erfindung.
- Fig.2: zeigt eine perspektivische Teilansicht des mit zwei Abscheideeinrichtungen versehenen Abscheideaggregats von Fig. 1.
- Fig.3: zeigt eine vergrößerte perspektivische Teilansicht der Abscheideeinrichtung von Fig. 1.
- Fig.4: zeigt in veränderter Perspektive eine noch weiter vergrößerte Ansicht eines Bereichs der Abscheideeinrichtung von Fig. 3.

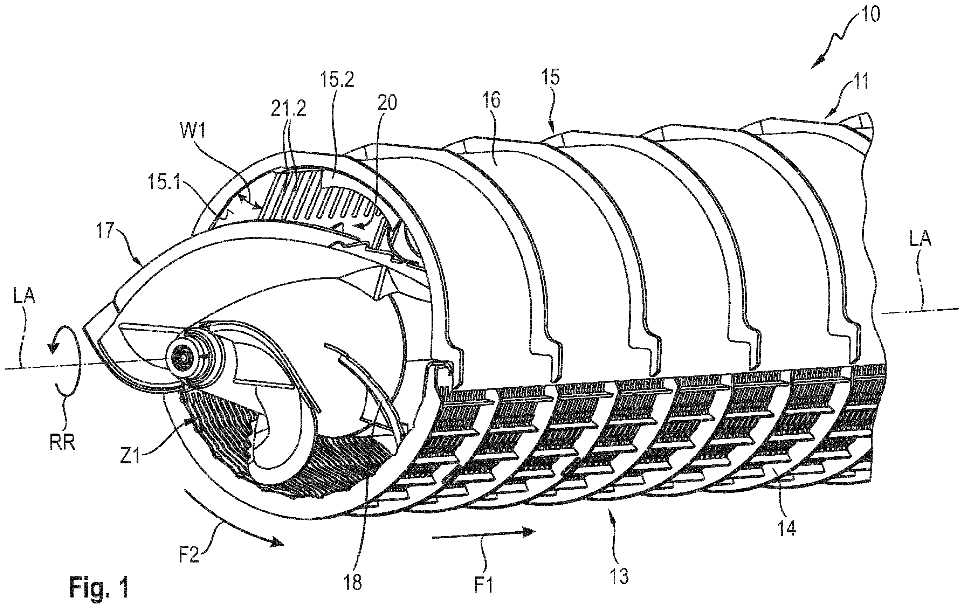

Im Folgenden wird unter Bezugnahme auf die Figuren 1 bis 4 eine gemäß einer Ausführungsform der Erfindung ausgebildete nach dem Axialflussprinzip arbeitende Abscheideeinrichtung 10 eines Mähdreschers (nicht vollständig gezeigt und nicht separat bezeichnet) beschrieben werden.

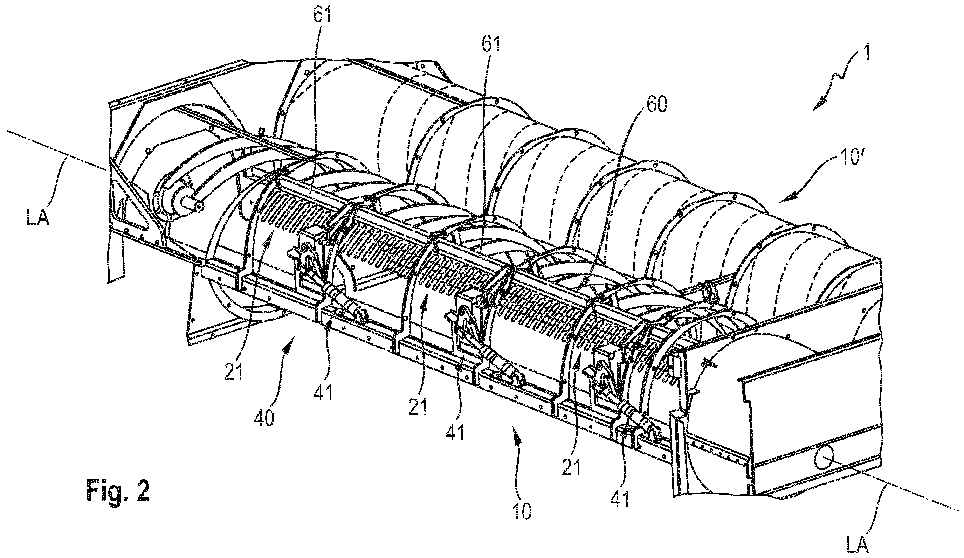

Fig.1 zeigt dabei eine perspektivische Teilansicht der Abscheideeinrichtung 10, und Fig. 2 zeigt eine perspektivische Teilansicht eines mit zwei solchen Abscheideeinrichtungen 10, 10' versehenen Abscheideaggregats 1 des Mähdreschers.

Da die beiden Abscheideeinrichtungen 10, 10' bis auf ihre spiegelbildliche Konfiguration und damit entgegengesetzten Rotationsrichtungen RR (siehe Fig. 1) zueinander identisch ausgebildet sind, wird im Folgenden nur die in Fig. 2 linke bzw. vordere Abscheideeinrichtung 10 detailliert beschrieben werden und sind deren Details unter Anwendung gleicher Bezugszeichen auf gleiche oder ähnliche Komponenten entsprechend auf die in Fig. 2 rechte bzw. hintere Abscheideeinrichtung 10' zu übertragen.

Wie aus Fig. 1 ersichtlich, weist die Abscheideeinrichtung 10 ein Gehäuse 11 mit einer Abscheidekorbanordnung 13 und einer Deckelanordnung 15, die gemeinsam einen Hohlzylinder bilden, und einen Abscheiderotor 17 auf, der drehbar gelagert in dem Hohlzylinder des Gehäuses 11 aufgenommen ist, so dass zwischen Gehäuse 11 und Abscheiderotor 17 ein Zwischenraum Z1 zum umfänglich und entlang einer Längsachse LA des Abscheiderotors 17 Fördern von Erntegut (nicht dargestellt) wie Getreide definiert ist. Die Längsachse LA bildet dabei als Mittellängsachse gleichzeitig eine Rotationsachse des Abscheiderotors 17.

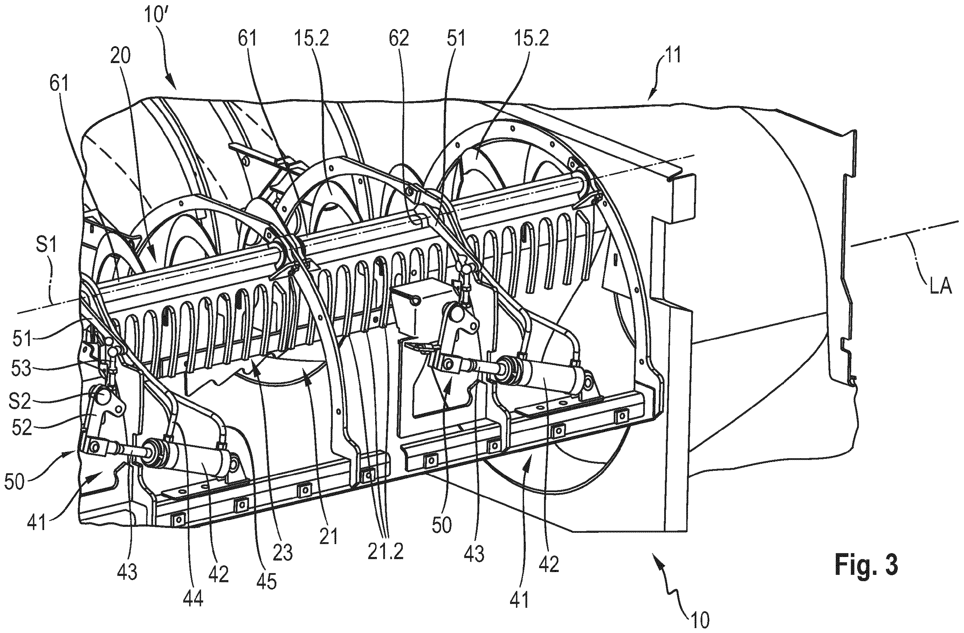

In Bezug auf die Figuren 2 bis 4 ist hier zu erwähnen, dass in diesen Figuren die Abscheidekorbanordnung 13 und der Abscheiderotor 17 weggelassen sind. Zudem ist in Fig. 2 und Fig. 3 eine Wandung der Deckelanordnung 15 jeweils transparent dargestellt.

Zum Fördern des Ernteguts weist der Abscheiderotor 17 auf seiner Umfangsfläche diese spiralförmig umspannende Mitnahmeelemente 18 auf, die das Erntegut in einer axialen Förderrichtung F1 und in einer umfänglichen Förderrichtung F2 der Abscheideeinrichtung 10 fördern.

Die Abscheidekorbanordnung 13 umfasst mindestens einen siebartigen Abscheidekorb 14, der einen Abscheidebereich der Abscheideeinrichtung 10 bildet. Vorzugsweise sind jedoch mehrere Abscheidekörbe 14 parallel zur Längsachse LA des Abscheiderotors 17 in axialer Richtung hintereinander liegend angeordnet. Die Abscheidekorbanordnung 13 weist eine Vielzahl von Durchtrittsöffnungen (nicht separat bezeichnet) auf, durch die hindurch Bestandteile (wie z.B. Körner) aus einem der Abscheideeinrichtung 10 zugeführten Erntegutstrom abgeschieden werden können.

Die Deckelanordnung 15 umfasst mindestens ein Deckelelement 16, wobei die Deckelanordnung 15 und die Abscheidekorbanordnung 13 miteinander verbunden den Abscheiderotor 17 in Umfangsrichtung gesehen jeweils etwa hälftig umgeben und somit den Hohlzylinder des Gehäuses 11 definieren. Vorzugsweise sind mehrere Deckelelemente 16 parallel zur Längsachse LA des Abscheiderotors 17 in axialer Richtung hintereinander liegend angeordnet.

Die Deckelanordnung 15 weist an einer dem Abscheiderotor 17 zugewandten Innenfläche 15.1 dieser eine Vielzahl von koaxial zur Längsachse LA des Abscheiderotors 17 nebeneinander angeordneten Leitelementen 15.2 auf, die sich spiralförmig nebeneinander angeordnet umfänglich abschnittsweise in radialer Richtung der Deckelanordnung 15 erstrecken.

Die Leitelemente 15.2 weisen durch die spiralförmige Erstreckung eine Richtungskomponente in der axialen Förderrichtung F1 des Abscheiderotors 17 auf und unterstützen somit eine axiale Förderung des Erntegutstroms von einem Eingang der Abscheideeinrichtung 10 entlang der Längsachse LA des Abscheiderotors 17 zu einem Ausgang der Abscheideeinrichtung 10.

An der dem Abscheiderotor 17 zugewandten Innenfläche 15.1 der Deckelanordnung 15 sind außerdem Gutstromeingriffsmittel 20 vorgesehen, die eingerichtet sind, umfänglich des Abscheiderotors 17, d.h. in der umfänglichen Förderrichtung F2, rampenartig radial in einen bei der umfänglichen Förderung des Ernteguts im Zwischenraum Z1 in der umfänglichen Förderrichtung F2 umlaufenden Erntegutstrom einzugreifen.

Die Gutstromeingriffsmittel 20 weisen eine Mehrzahl von kammartigen Gutstromeingriffselementen 21 (siehe Fig. 2) auf, die entlang der Längsachse LA des Abscheiderotors 17 ihrer jeweiligen Länge nach hintereinander angeordnet sind und die unabhängig voneinander verstellbar sind, so dass ihre jeweilige radiale Eingriffstiefe in den Zwischenraum Z1 veränderbar ist,

An der Abscheideeinrichtung 10 sind außerdem Antriebsmittel 40 vorgesehen, die mit den Gutstromeingriffsmitteln 20 zum Antreiben einer Verstellung dieser verbunden sind und die von außerhalb des Gehäuses 11 aus zum Verstellantrieb der Gutstromeingriffsmittel 20 ansteuerbar sind. Genauer weisen die Antriebsmittel 40 für jedes der Gutstromeingriffselemente 21 eine eigene Antriebseinheit 41 auf, die mit dem jeweiligen Gutstromeingriffselement 21 zum Antreiben einer Verstellung dessen verbunden ist und die von außerhalb des Gehäuses 11 aus zum Verstellantrieb des jeweiligen Gutstromeingriffselements 21 ansteuerbar ist.

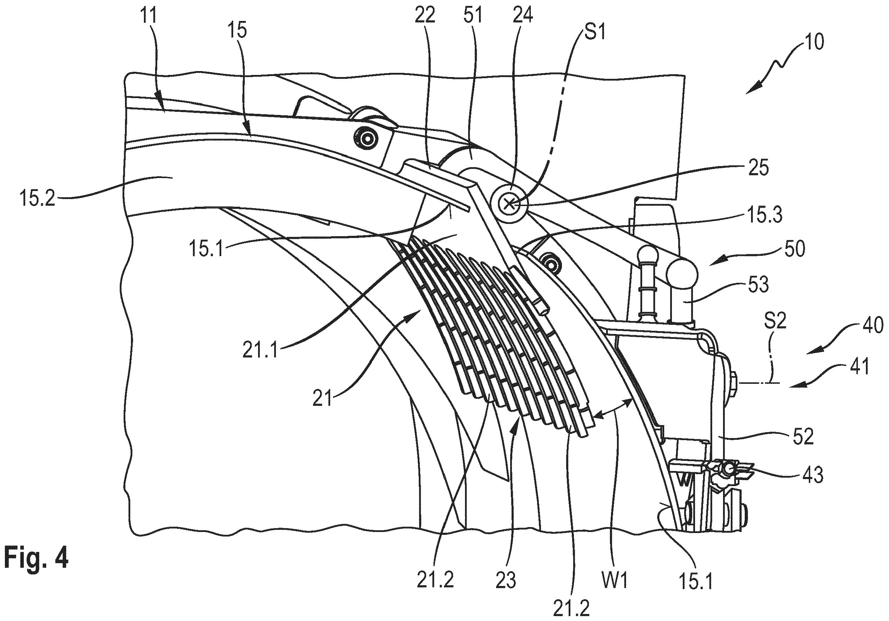

Wie in Fig. 3 und Fig. 4 gezeigt, hat jedes der Gutstromeingriffselemente 21 eine Breite, welche von zwei entlang der Längsachse LA des Abscheiderotors 17 verlaufenden Längsrändern 22, 23 des Gutstromeingriffselements 21 begrenzt ist. Zudem hat jedes der Gutstromeingriffselemente 21 entlang der Längsachse LA des Abscheiderotors 17 eine Länge, die zumindest einem Teil einer axialen Erstreckung der Innenfläche 15.1 der Deckelanordnung 15 entspricht. Bevorzugt erstreckt sich jedes Gutstromeingriffselement 21 über die gesamte Länge eines positionsmäßig jeweils dazu korrespondierenden Abscheidekorbes 14 der Abscheidekorbanordnung 13.

Ein in Fig. 4 oberer Längsrand 22 der beiden Längsränder 22, 23 jedes Gutstromeingriffselements 21 ist über eine sich entlang der Längsachse LA des Abscheiderotors 17 erstreckende allen Gutstromeingriffselementen 21 gemeinsame Schwenkachse S1 schwenkbar gelagert mit dem Gehäuse 11 verbunden, so dass zum Verstellen der Gutstromeingriffsmittel 20 bzw. zum separaten Verstellen jedes der Gutstromeingriffselemente 21 ein zwischen der Innenfläche 15.1 der Deckelanordnung 15 und dem jeweiligen Gutstromeingriffselement 21 definierter Anstellwinkel W1 (siehe Fig. 1 und Fig. 4) durch um die Schwenkachse S1 Verschwenken des Gutstromeingriffselements 21 veränderbar ist.

Genauer ist in der Deckelanordnung 15 ein sich längs entlang der Längsachse LA des Abscheiderotors 17 erstreckender Durchgangsschlitz 15.3 ausgebildet. Jedes der Gutstromeingriffselemente 21 ist längsseits in den Durchgangsschlitz 15.3 eingesetzt, so dass der an der Schwenkachse S1 gelagerte eine Längsrand 22 des Gutstromeingriffselements 21 aus dem Gehäuse 11 nach außen vorsteht und der andere Längsrand 23 des Gutstromeingriffselements 21 innerhalb des Gehäuses 11 im Zwischenraum Z1 angeordnet ist.

Die Schwenkachse S1 befindet sich außerhalb des Gehäuses 11. Jedes Gutstromeingriffselement 21 ist an seinem einen Längsrand 22 mit einer sich längs entlang der Längsachse LA des Abscheiderotors 17 erstreckenden Hülse 24 verbunden, welche drehbar auf ein sich längs entlang der Längsachse LA des Abscheiderotors 17 erstreckendes, am Gehäuse 11 gelagertes und allen Gutstromeingriffselementen 21 gemeinsames Achsteil 25 aufgeschoben ist, so dass die Verschwenkbarkeit des Gutstromeingriffselements 21 um die Schwenkachse S1 gewährleistet ist.

Die Abscheideeinrichtung 10 weist außerdem eine Abdeckungsanordnung 60 (nur in Fig. 2 und Fig. 3 gezeigt) auf, die entlang der Längsachse LA des Abscheiderotors 17 eine Länge hat, die mindestens der Länge des Durchgangsschlitzes 15.3 entspricht. Zudem hat die Abdeckungsanordnung 60 umfänglich des Abscheiderotors 17 eine Breite, die größer als die Breite des Durchgangsschlitzes 15.3 ist. Die Abdeckungsanordnung 60 ist radial auswärts der Schwenkachse S1 längs entlang der Länge des Durchgangsschlitzes 15.3 angeordnet, so dass sie den Durchgangsschlitz 15.3 seiner Breite nach überspannend abdeckt.

Bevorzugt umfasst die Abdeckungsanordnung 60 mehrere entlang der Längsachse LA des Abscheiderotors 17 bzw. der Länge des Durchgangsschlitzes 15.3 aneinandergereihte Abdeckungselemente 61, welche gemeinsam mindestens die Länge des Durchgangsschlitzes 15.3 haben.

In den Abdeckungselementen 61 der Abdeckungsanordnung 60 ist im Bereich der Schwenkachse S1 für jedes Gutstromeingriffselement 21 eine schlitzförmige Durchgangsöffnung 62 vorgesehen, durch die hindurchgreifend ein Verstellhebel 51 eines Verbindungsgestänges 50 der dem jeweiligen Gutstromeingriffselement 21 zum Verstellantrieb zugeordneten Antriebseinheit 41 mit der an dem einen Längsrand 22 vorgesehenen Hülse 24 des betreffenden Gutstromeingriffselements 21 verbunden ist.

Jede der Antriebseinheiten 41 der Antriebsmittel 40 ist außerhalb des Gehäuses 11 angeordnet und weist einen Pneumatikzylinder 42 auf, dessen Kolbenstange 43 über einen um eine Schwenkachse S2 verschwenkbaren Kipphebel 52 und eine Kugelkopfstange 53 des Verbindungsgestänges 50 mit einem der Hülse 24 abgewandten Längsende des Verstellhebels 51 des Verbindungsgestänges 50 verbunden ist.

Somit bewirkt ein Einfahren der Kolbenstange 43 des Pneumatikzylinders 42 ein entgegen dem Uhrzeigersinn Verschwenken des Kipphebels 52 und eine Aufwärtsbewegung der Kugelkopfstange 53 des Verbindungsgestänges 50. Die Aufwärtsbewegung der Kugelkopfstange 53 bewirkt ihrerseits ein Aufwärtsschwenken des Verstellhebels 51 des Verbindungsgestänges 50, wodurch das damit antriebsverbundene Gutstromeingriffselement 21 in Richtung zur Innenfläche 15.1 der Deckelanordnung 15 verschwenkt wird, so dass sich der Anstellwinkel W1 vermindert. Damit wird die radiale Eingriffstiefe des Gutstromeingriffselements 21 in den Zwischenraum Z1 vermindert.

Umgekehrt bewirkt ein Ausfahren der Kolbenstange 43 des Pneumatikzylinders 42 ein im Uhrzeigersinn Verschwenken des Kipphebels 52 und eine Abwärtsbewegung der Kugelkopfstange 53 des Verbindungsgestänges 50. Die Abwärtsbewegung der Kugelkopfstange 53 bewirkt ihrerseits ein Abwärtsschwenken des Verstellhebels 51 des Verbindungsgestänges 50, wodurch das damit antriebsverbundene Gutstromeingriffselement 21 in Richtung weg von der Innenfläche 15.1 der Deckelanordnung 15 verschwenkt wird, so dass sich der Anstellwinkel W1 vergrößert. Damit wird die radiale Eingriffstiefe des Gutstromeingriffselements 21 in den Zwischenraum Z1 vergrößert.

Um einen Verfahrweg des Gutstromeingriffselements 21 bzw. einen Stellbereich für den Anstellwinkel W1 stufenlos verändern bzw. einstellen zu können, sind z.B. jeweilige Kugelköpfe (nicht separat bezeichnet) der Kugelkopfstange 53 des Verbindungsgestänges 50 über Gewindeverstellung verstellbar, so dass eine Länge der Kugelkopfstange 53 verstellbar ist.

Wie am besten aus den Figuren 3 und 4 ersichtlich, ist jedes Gutstromeingriffselement 21 ausgehend von seinem an der Schwenkachse S1 gelagerten einen Längsrand 22 über einen vorbestimmten Breitenabschnitt 21.1 dessen flächenmäßig geschlossen ausgebildet und schließen sich an den flächenmäßig geschlossenen Breitenabschnitt 21.1 eine Mehrzahl von kammartig nebeneinander verlaufenden Eingriffsfingern 21.2 an, deren freie Enden zusammen den anderen Längsrand 23 des Gutstromeingriffselements 21 definieren.

Gemäß der Erfindung können sich die Eingriffsfinger 21.2 ohne Neigung in Richtung der Längsachse LA des Abscheiderotors 17 erstrecken, so dass sie den Erntegutstrom bezüglich seines Transports in der Axialrichtung nicht beeinflussen, oder können sich die Eingriffsfinger 21.2 mit einer vorbestimmten Neigung in Richtung der Längsachse LA des Abscheiderotors 17 erstrecken, so dass sie den Erntegutstrom bezüglich seines Transports in der Axialrichtung gezielt beeinflussen.

Beispielsweise können sich die Eingriffsfinger 21.2 der Gutstromeingriffselemente 21 mit einer solchen Neigung in Richtung der Längsachse LA des Abscheiderotors 17 erstrecken, dass ihre Erstreckungsrichtung jener der Leitelemente 15.2 entspricht, welche durch ihre spiralförmige Erstreckung eine Richtungskomponente in Axialrichtung des Abscheiderotors 17 aufweisen.

Wie insbesondere aus Fig. 4 ersichtlich, weist der Durchgangsschlitz 15.3 der Deckelanordnung 15 umfänglich des Abscheiderotors 17 eine solche Breite auf und sind die Gutstromeingriffselemente 21 so geformt, dass sich die Gutstromeingriffselemente 21 bei minimalem Anstellwinkel W1 jeweils an die Innenfläche 15.1 der Deckelanordnung 15 anlehnen können. Auf diese Weise kann in einer Minimaleingriffstellung (d.h. bei minimalem Anstellwinkel W1) der Gutstromeingriffselemente 21, welche auch eine Außerbetriebsstellung sein kann, eine stabile und definierte Endlage für jedes Gutstromeingriffselement 21 bereitgestellt werden.

Dadurch, dass der flächenmäßig geschlossene Breitenabschnitt 21.1 jedes Gutstromeingriffselements 21 breiter als der Durchgangsschlitz 15.3 ausgebildet ist, können die Gutstromeingriffselemente 21 bei minimalem Anstellwinkel W1 dieser den Durchgangsschlitz 15.3 im Bereich ihrer jeweiligen Längenausdehnung verschließen, wie in Fig. 4 angedeutet.

Um die Pneumatikzylinder 42 der Antriebseinheiten 41 der Antriebsmittel 40 von außerhalb des Gehäuses 11 zum Verstellantrieb der jeweiligen Gutstromeingriffselemente 21 separat ansteuern zu können, ist jeder Pneumatikzylinder 42 über gehäuseextern verlaufende Druckluftleitungen 44, 45 mit einer Steuerventilanordnung (nicht gezeigt) fluidverbunden, welche ihrerseits mit einer Druckluftquelle (nicht gezeigt) des Mähdreschers fluidverbunden ist. Die Steuerventilanordnung ist außerdem zur Ansteuerung dieser mit einer Steuervorrichtung (nicht gezeigt) des Mähdreschers signalverbunden.

Alternativ können die Antriebseinheiten 41 Hydraulikzylinder anstelle von Pneumatikzylindern aufweisen, die durch entsprechende Hydraulikleitungen mit entsprechenden einer Steuerventilanordnung fluidverbunden sind. Gemäß einer weiteren Ausgestaltung können als Antriebseinheiten 41 auch elektrische Antriebe wie beispielsweise Linearmotoren zum Einsatz kommen.

### Bezugszeichenliste

- 1: Abscheideaggregat
- 10, 10': Abscheideeinrichtung
- 11: Gehäuse
- 13: Abscheidekorbanordnung
- 14: Abscheidekorb
- 15: Deckelanordnung
- 15.1: Innenfläche
- 15.2: Leitelement
- 15.3: Durchgangsschlitz
- 16: Deckelelement
- 17: Abscheiderotor
- 18: Mitnahmeelement
- 20: Gutstromeingriffsmittel
- 21: Gutstromeingriffselement
- 21.1: Breitenabschnitt
- 21.2: Eingriffsfinger
- 22: Längsrand
- 23: Längsrand
- 24: Hülse
- 25: Achsteil
- 40: Antriebsmittel
- 41: Antriebseinheit
- 42: Pneumatikzylinder
- 43: Kolbenstange
- 44: Druckluftleitung
- 45: Druckluftleitung
- 50: Verbindungsgestänge
- 51: Verstellhebel
- 52: Kipphebel
- 53: Kugelkopfstange
- 60: Abdeckungsanordnung
- 61: Abdeckungselement
- 62: Durchgangsöffnung
- F1: axiale Förderrichtung
- F2: umfängliche Förderrichtung
- LA: Längsachse
- RR: Rotationsrichtung
- S1: Schwenkachse
- S2: Schwenkachse
- W1: Anstellwinkel
- Z1: Zwischenraum

## Patentansprüche

1. Abscheideeinrichtung (10, 10') für einen Mähdrescher, welche nach dem Axialflussprinzip arbeitet, aufweisend:
∘ ein Gehäuse (11) mit einer Abscheidekorbanordnung (13) und einer Deckelanordnung (15), die gemeinsam einen Hohlzylinder bilden,
∘ einen Abscheiderotor (17), der drehbar gelagert in dem Hohlzylinder des Gehäuses (11) aufgenommen ist, so dass zwischen Gehäuse (11) und Abscheiderotor (17) ein Zwischenraum (Z1) zum Fördern von Erntegut umfänglich und entlang einer Längsachse (LA) des Abscheiderotors (17) definiert ist,
wobei an einer dem Abscheiderotor (17) zugewandten Innenfläche (15.1) der Deckelanordnung (15) Gutstromeingriffsmittel (20) vorgesehen sind, die eingerichtet sind, umfänglich des Abscheiderotors (17) rampenartig radial in einen bei der umfänglichen Förderung des Ernteguts im Zwischenraum (Z1) umlaufenden Erntegutstrom einzugreifen, wobei die Gutstromeingriffsmittel (20) verstellbar sind, so dass eine radiale Eingriffstiefe der Gutstromeingriffsmittel (20) in den Zwischenraum (Z1) veränderbar ist, und Antriebsmittel (40) vorgesehen sind, die mit den Gutstromeingriffsmitteln (20) zum Antreiben einer Verstellung dieser verbunden sind und die von außerhalb des Gehäuses (11) aus zum Verstellantrieb der Gutstromeingriffsmittel (20) ansteuerbar sind,
**dadurch gekennzeichnet, dass**
die Gutstromeingriffsmittel (20) eine Mehrzahl von kammartigen Gutstromeingriffselementen (21) aufweisen, die entlang der Längsachse (LA) des Abscheiderotors (17) ihrer jeweiligen Länge nach hintereinander angeordnet sind und die unabhängig voneinander verstellbar sind, so dass ihre jeweilige radiale Eingriffstiefe in den Zwischenraum (Z1) veränderbar ist.

2. Abscheideeinrichtung (10, 10') gemäß Anspruch 1, wobei die Gutstromeingriffsmittel (20) mindestens ein Gutstromeingriffselement (21) mit einer Breite aufweisen, welche von zwei entlang der Längsachse (LA) des Abscheiderotors (17) verlaufenden Längsrändern (22, 23) des Gutstromeingriffselements (21) begrenzt ist, und wobei das mindestens eine Gutstromeingriffselement (21) entlang der Längsachse (LA) des Abscheiderotors (17) eine Länge aufweist, die zumindest einem Teil einer axialen Erstreckung der Innenfläche (15.1) der Deckelanordnung (15) entspricht.

3. Abscheideeinrichtung (10, 10') gemäß Anspruch 2, wobei einer der beiden Längsränder (22) des mindestens einen Gutstromeingriffselements (21) an einer sich entlang der Längsachse (LA) des Abscheiderotors (17) erstreckenden Schwenkachse (S1) schwenkbar gelagert ist, so dass zum Verstellen der Gutstromeingriffsmittel (20) ein zwischen der Innenfläche (15.1) der Deckelanordnung (15) und dem mindestens einen Gutstromeingriffselement (21) definierter Anstellwinkel (W1) durch um die Schwenkachse (S1) Verschwenken des Gutstromeingriffselements (21) veränderbar ist.

4. Abscheideeinrichtung (10, 10') gemäß Anspruch 3, wobei in der Deckelanordnung (15) ein sich längs entlang der Längsachse (LA) des Abscheiderotors (17) erstreckender Durchgangsschlitz (15.3) ausgebildet ist und das mindestens eine Gutstromeingriffselement (21) längsseits in den Durchgangsschlitz (15.3) eingesetzt ist, so dass der an der Schwenkachse (S1) gelagerte eine Längsrand (22) des Gutstromeingriffselements (21) aus dem Gehäuse (11) nach außen vorsteht und der andere Längsrand (23) des Gutstromeingriffselements (21) innerhalb des Gehäuses (11) angeordnet ist, und wobei die Schwenkachse (S2) außerhalb des Gehäuses (11) angeordnet ist.

5. Abscheideeinrichtung (10, 10') gemäß Anspruch 4, wobei der Durchgangsschlitz (15.3) umfänglich des Abscheiderotors (17) eine solche Breite aufweist, dass sich das mindestens eine Gutstromeingriffselement (21) bei minimalem Anstellwinkel (W1) an die Innenfläche (15.1) der Deckelanordnung (15) anlehnen kann.

6. Abscheideeinrichtung (10, 10') gemäß Anspruch 4 oder 5, wobei das mindestens eine Gutstromeingriffselement (21) so ausgebildet ist, dass es bei minimalem Anstellwinkel (W1) dessen den Durchgangsschlitz (15.3) im Bereich der Länge des mindestens einen Gutstromeingriffselements (21) verschließt.

7. Abscheideeinrichtung (10, 10') gemäß einem der Ansprüche 4 bis 6, ferner mit einer Abdeckungsanordnung (60), die entlang der Längsachse (LA) des Abscheiderotors (17) eine Länge, die mindestens der Länge des Durchgangsschlitzes (15.3) entspricht, und umfänglich des Abscheiderotors (17) eine Breite aufweist, die größer als die Breite des Durchgangsschlitzes (15.3) ist, und wobei die Abdeckungsanordnung (60) radial auswärts der Schwenkachse (S1) längs entlang der Länge des Durchgangsschlitzes (15.3) angeordnet ist, so dass sie den Durchgangsschlitz (15.3) seiner Breite nach überspannend abdeckt.

8. Abscheideeinrichtung (10, 10') gemäß Anspruch 7, wobei die Abdeckungsanordnung (60) mindestens eine Durchgangsöffnung (62) im Bereich der Schwenkachse (S2) aufweist, und wobei die Antriebsmittel (40) außerhalb des Gehäuses (11) angeordnet sind und das mindestens eine Gutstromeingriffselement (21) durch die mindestens eine Durchgangsöffnung (62) hindurch mit den Antriebsmitteln (40) antriebsverbunden ist.

9. Abscheideeinrichtung (10, 10') gemäß einem der Ansprüche 3 bis 8, wobei das mindestens eine Gutstromeingriffselement (21) ausgehend von seinem an der Schwenkachse (S1) gelagerten einen Längsrand (22) über einen vorbestimmten Breitenabschnitt (21.1) flächenmäßig geschlossen ausgebildet ist und sich an den flächenmäßig geschlossenen Breitenabschnitt (21.1) eine Mehrzahl von kammartig nebeneinander verlaufenden Eingriffsfingern (21.2) anschließen, deren freie Enden zusammen den anderen Längsrand (23) des Gutstromeingriffselements (21) definieren.

10. Abscheideeinrichtung (10, 10') gemäß einem der Ansprüche 2 bis 9, wobei die Antriebsmittel (40) für jedes der Gutstromeingriffselemente (21) eine eigene Antriebseinheit (41) aufweisen, die mit dem jeweiligen Gutstromeingriffselement (21) zum Antreiben einer Verstellung dessen verbunden ist und die von außerhalb des Gehäuses (11) aus zum Verstellantrieb des jeweiligen Gutstromeingriffselements (21) ansteuerbar ist.

## Claims

1. A separating device (10, 10') for a combine harvester which operates on the axial flow principle, comprising:
- a housing (11) having a separating concave arrangement (13) and a cover arrangement (15) which jointly form a hollow cylinder,
- a separating rotor (17) accommodated mounted rotatably in the hollow cylinder of the housing (11) so that an intermediate space (Z1) for conveying crop material is defined between the housing (11) and the separating rotor (17) peripherally and along a longitudinal axis (LA) of the separating rotor (17);
wherein provided at an inner surface of the cover arrangement (15), that faces the separating rotor (17), are crop flow engagement means (20) adapted to engage ramp-like peripherally of the separating rotor (17) into a crop flow that circulates in the intermediate space (Z1) upon peripheral conveyance of the crop flow, wherein the crop flow engagement means (20) are adjustable so that a radial engagement depth of the crop flow engagement means (20) into the intermediate space (Z1) is variable, and drive means (40) are provided which are connected to the crop flow engagement means (20) in order to drive adjustment thereof and are actuable from outside the housing (11) for the adjusting drive of the the crop flow engagement means (20),
**characterised in that** the crop flow engagement means (20) comprise a plurality of comb-like crop flow engagement elements (21) which are disposed along the longitudinal axis (LA) of the separating rotor (17) in succession in accordance with their respective length and are adjustable independently of each other so that their respective radial engagement depth into the intermediate space (Z1) is variable.

2. A separating device (10, 10') according to claim 1 wherein the crop flow engagement means (20) comprise at least one crop flow engagement element (21) of a width which is delimited by two longitudinal edges (22, 23) of the crop flow engagement element (21) extending along the longitudinal axis (LA) of the separating rotor (17) and wherein the at least one crop flow engagement element (21) is of a length, along the longitudinal axis (LA) of the separating rotor (17), that corresponds to at least a portion of an axial extent of the inner surface (15.1) of the cover arrangement (15).

3. A separating device (10, 10') according to claim 2 wherein one of the two longitudinal edges (22) of the at least one crop flow engagement element (21) is pivotably mounted at a pivot axis (S1) extending along the longitudinal axis (LA) of the separating rotor (17) so that to adjust the crop flow engagement means (20) a setting angle (W1) defined between the inner surface (15.1) of the cover arrangement (15) and the at least one crop flow engagement element (21) is variable by pivoting the crop flow engagement element (21) about the pivot axis (S1).

4. A separating device (10, 10') according to claim 3 wherein a passage slot (15.3) which extends lengthwise along the longitudinal axis (LA) of the separating rotor (17) is formed in the cover arrangement (15) and the at least one crop flow engagement element (21) is inserted lengthwise into the passage slot (15.3) so that the one longitudinal edge (22) of the crop flow engagement element (21), that is mounted at the pivot axis (S1), projects outwardly of the housing (11) and the other longitudinal edge of the crop flow engagement element (21) is disposed within the housing (11); and wherein the pivot axis (S2) is disposed outside the housing (11).

5. A separating device (10, 10') according to claim 4 wherein the passage slot (15.3) is of such a width peripherally of the separating rotor (17) that the at least one crop flow engagement element (21) can bear against the inner surface (15.1) of the cover arrangement (15) at a minimum setting angle (W1).

6. A separating device (10, 10') according to claim 4 or claim 5 wherein the at least one crop flow engagement element (21) is so adapted that at a minimum setting angle (W1) thereof it closes the passage slot (15.3) in the region of the length of the at least one crop flow engagement element (21).

7. A separating device (10, 10') according to one of claims 4 to 6 further comprising a covering arrangement (60) of a length along the longitudinal axis (LA) of the separating rotor (17), that corresponds at least to the length of the passage slot (15.3) and a width peripherally of the separating rotor (17), that is greater than the width of the passage slot (15.3), and wherein the covering arrangement (60) is disposed radially outwardly of the pivot axis (S1) lengthwise along the length of the passage slot (15.3) so that it spanningly covers the passage slot (15.3) over the width thereof.

8. A separating device (10, 10') according to claim 7 wherein the covering arrangement (60) comprises at least one passage opening (62) in the region of the pivot axis (S2), and wherein the drive means (40) is disposed outside the housing (11) and the at least one crop flow engagement element (21) is drivingly connected to the drive means (40) through the at least one passage opening (62).

9. A separating device (10, 10') according to one of claims 3 to 8 wherein the at least one crop flow engagement element (21) is of a closed configuration in respect of its surface over a predetermined widthwise portion from its one longitudinal edge (22) mounted at the pivot axis (S1) and a plurality of engagement fingers (21.2)extending comb-like in mutually adjacent relationship adjoin the widthwise portion (21) which is closed in respect of its surface, the free ends of the engagement fingers together defining the other longitudinal edge (230 of the crop flow engagement element (21).

10. A separating device (10, 10') according to one of claims 2 to 9 wherein the drive means (40) for each of the crop flow engagement elements (21) includes a dedicated drive unit (41) which is connected to the respective crop flow engagement element (21) for driving an adjustment thereof and is actuable from outside the housing (11) to drive adjustment of the respective crop flow engagement element (21).

## Revendications

1. Équipement séparateur (10, 10') pour une moissonneuse-batteuse, lequel fonctionne selon le principe du flux axial, comprenant :
∘ un carter (11) avec un agencement de corbeille de séparation (13) et un agencement de couvercle (15), lesquels forment ensemble un cylindre creux,
∘ un rotor séparateur (17) qui est logé dans le cylindrique creux du carter (11) en étant monté en rotation, de façon à définir entre le carter (11) et le rotor séparateur (17) un interstice (Z1) pour convoyer du produit récolté en périphérie et suivant un axe longitudinal (LA) du rotor séparateur (17),
sur une surface intérieure (15.1) de l'agencement de couvercle (15) orientée vers le rotor séparateur (17) étant prévus des moyens d'engagement dans le flux de produit (20) qui sont agencés pour s'engager radialement, en périphérie du rotor séparateur (17), à la manière de rampes dans un flux de récolte circulant dans l'interstice (Z1) lors du convoyage périphérique du produit récolté, les moyens d'engagement dans le flux de produit (20) étant réglables de façon à pouvoir modifier une profondeur d'engagement radial des moyens d'engagement dans le flux de produit (20) dans l'interstice (Z1), et des moyens d'entraînement (40) étant prévus, lesquels sont reliés aux moyens d'engagement dans le flux de produit (20) pour entraîner un moyen de réglage de ceux-ci et sont commandables de l'extérieur du carter (11) pour commander le réglage des moyens d'engagement dans le flux de produit (20), **caractérisé en ce que** les moyens d'engagement dans le flux de produit (20) comportent une pluralité d'éléments d'engagement dans le flux de produit en forme de peignes (21) qui sont disposés les uns derrière les autres suivant l'axe longitudinal (LA) du rotor séparateur (17) en fonction de leur longueur respective et qui sont réglages indépendamment les uns des autres, de sorte que leur profondeur d'engagement radial respective dans l'interstice (Z1) est variable.

2. Équipement séparateur (10, 10') selon la revendication 1, les moyens d'engagement dans le flux de produit (20) comportant au moins un élément d'engagement dans le flux de produit (21) avec une largeur qui est limitée par deux bords longitudinaux (22, 23) de l'élément d'engagement dans le flux de produit (21) qui s'étendent suivant l'axe longitudinal (LA) du rotor séparateur (17), et le au moins un élément d'engagement dans le flux de produit (21) présentant, suivant l'axe longitudinal (LA) du rotor séparateur (17), une longueur qui correspond au moins à une partie de l'extension axiale de la surface intérieure (15.1) de l'agencement de couvercle (15).

3. Équipement séparateur (10, 10') selon la revendication 2, un des deux bords longitudinaux (22) du au moins un élément d'engagement dans le flux de produit (21) étant monté pivotant sur un axe de pivotement (S1) s'étendant suivant l'axe longitudinal (LA) du rotor séparateur (17), de sorte que, pour régler les moyens d'engagement dans le flux de produit (20), un angle d'incidence (W1) défini entre la surface intérieure (15.1) de l'agencement de couvercle (15) et le au moins un élément d'engagement dans le flux de produit (21) est modifiable par pivotement de l'élément d'engagement dans le flux de produit (21) autour de l'axe de pivotement (S1).

4. Équipement séparateur (10, 10') selon la revendication 3, dans l'agencement de couvercle (15) étant ménagée une fente traversante (15.3) s'étendant suivant l'axe longitudinal (LA) du rotor séparateur (17), et le au moins un élément d'engagement dans le flux de produit (21) étant inséré sur sa longueur dans la fente traversante (15.3), de sorte que l'un (22) des bords longitudinaux de l'élément d'engagement dans le flux de produit (21) monté sur l'axe de pivotement (S1) dépasse du carter (11) vers l'extérieur et que l'autre bord longitudinal (23) de l'élément d'engagement dans le flux de produit (21) est disposé à l'intérieur du carter (11), et l'axe de pivotement (S2) est disposé à l'extérieur du carter (11).

5. Équipement séparateur (10, 10') selon la revendication 4, la fente traversante (15.3) présentant en périphérie du rotor séparateur (17) une largeur telle que, en présence d'un angle d'incidence (W1) minimal, le au moins un élément d'engagement dans le flux de produit (21) puisse s'appuyer contre la surface intérieure (15.1) de l'agencement de couvercle (15).

6. Équipement séparateur (10, 10') selon la revendication 4 ou 5, le au moins un élément d'engagement dans le flux de produit (21) étant conçu de façon que, lorsqu'il est positionné selon un angle d'incidence (W1) minimal, il ferme la fente traversante (15.3) dans la zone de la longueur du au moins un élément d'engagement dans le flux de produit (21).

7. Équipement séparateur (10, 10') selon une des revendications 4 à 8, comprenant également un agencement de recouvrement (60) qui, suivant l'axe longitudinal (LA) du rotor séparateur (17), présente une longueur qui correspond au moins à la longueur de la fente traversante (15.3) et, en périphérie du rotor séparateur (17), présente une largeur qui est supérieure à la largeur de la fente traversante (15.3), et l'agencement de recouvrement (60) est disposé radialement à l'extérieur de l'axe de pivotement (S1) suivant la longueur de la fente traversante (15.3), de sorte qu'il recouvre la fente traversante (15.3) dans sa largeur en la chevauchant.

8. Équipement séparateur (10, 10') selon la revendication 7, l'agencement de recouvrement (60) comportant au moins une ouverture traversante (62) dans la zone de l'axe de pivotement (S2), et les moyens d'entraînement (40) étant disposés à l'extérieur du carter (11), et le au moins un élément d'engagement dans le flux de produit (21) étant relié en entraînement aux moyens d'entraînement (40) à travers la au moins une ouverture traversante (62).

9. Équipement séparateur (10, 10') selon une des revendications 3 à 8, le au moins un élément d'engagement dans le flux de produit (21) étant conçu, à partir d'un (22) de ses bords longitudinaux monté sur l'axe de pivotement (S1), avec une surface fermée sur une portion de largeur prédéterminée (21.1), et à la portion de largeur (21.1) à surface fermée étant raccordée une pluralité de doigts d'engagement (21.2) qui s'étendent côte à côte en forme de peigne et dont les extrémités libres définissent ensemble l'autre bord longitudinal (23) de l'élément d'engagement dans le flux de produit (21).

10. Équipement séparateur (10, 10') selon une des revendications 2 à 9, les moyens d'entraînement (40) pour chacun des éléments d'engagement dans le flux de produit (21) comportant une unité d'entraînement propre (41) qui est reliée à l'élément d'engagement dans le flux de produit (21) correspondant pour entraîner un moyen de réglage de celui-ci et qui est commandable de l'extérieur du carter (11) pour commander le réglage de l'élément d'engagement dans le flux de produit (21) correspondant.
